# FASCICULE DE BREVET EUROPEEN

(11) **EP 1 411 529 B1**
(45) Date de publication et mention de la délivrance du brevet: **19.12.2007**
(21) Numéro de dépôt: 03102373.2
(22) Date de dépôt: 30.07.2003
(51) Int. Cl.: G21C 19/18, G21C 19/20

(54) **Procédé pour la mise en place d'assemblages de combustible nucléaire au sein du coeur d'un réacteur de centrale nucléaire, et dispositif pour la mise en oeuvre de ce procédé**
Verfahren zum Aufstellen von Kernbrennstabbündeln in den Reaktorkern eines Kernkraftwerks und Vorrichtung zur Ausführung des Verfahrens
Method for positioning nuclear fuel assemblies in a nuclear plant reactor core and installation for carrying out said method

(30) Priorité: 15.10.2002 FR 0212769
(43) Date de publication de la demande: 21.04.2004
(73) Titulaire: REEL, 69450 Saint Cyr au Mont d'Or (FR); Areva NP, 92400 Courbevoie (FR)
(72) Inventeur: Jullien, Michel M., 69480 Lucenay (FR)
(74) Mandataire: Vuillermoz, Bruno

(56) Documents cités:
- EP-A- 0 620 561
- WO-A-01/84557
- FR-A- 2 652 942
- DATABASE WPI Section PQ, Week 198024 Derwent Publications Ltd., London, GB; Class P63, AN 1980-F3166C XP002240214 & SU 694 374 A (SOYUZNAUCHPLITPROM), 22 novembre 1979 (1979-11-22)

## Description

L'invention concerne un procédé pour la mise en place des assemblages de combustibles nucléaires au sein d'un coeur de réacteur d'une centrale nucléaire.

L'invention concerne également un dispositif permettant la mise en oeuvre de ce procédé.

De manière connue, le coeur de réacteur d'une centrale nucléaire est constitué d'une pluralité d'assemblages de combustible nucléaire, disposés côte à côte sur une plaque support dite « plaque de coeur ».

Une telle plaque présente une pluralité d'emplacements, généralement de forme carrée, disposés côte à côte selon une forme géométrique sensiblement octogonale, régulière.

Chacun des assemblages du combustible est placé sur un emplacement précis, qui à cet effet présente des tenons mâles de positionnement, ainsi que des trous ou orifices de circulation d'un liquide de refroidissement et notamment de l'eau.

Le nombre de ces assemblages de combustible dépend de la puissance du réacteur.

Traditionnellement, le chargement du coeur du réacteur s'effectue depuis le niveau supérieur d'une piscine, au moyen d'une machine de chargement susceptible de se déplacer au-dessus de ladite piscine. Les assemblages sont positionnés de manière unitaire, les uns à côté des autres, au niveau de la plaque de coeur au moyen d'un mât télescopique vertical actionné depuis la machine de chargement, l'extrémité dudit mât étant pourvue d'un grappin venant se saisir de l'extrémité supérieure desdits assemblages combustibles.

L'un des problèmes majeurs auxquels sont confrontés les exploitants de telles centrales nucléaires réside dans les périodes relativement longues nécessaires au chargement d'un coeur de réacteur, compte-tenu de la multiplicité des opérations à réaliser.

Il n'est pas rare en effet que le changement d'un coeur de réacteur nécessite l'arrêt de la centrale pour une période de plusieurs semaines, limitant d'autant la production d'énergie électrique.

Cette durée liée au chargement et déchargement du réacteur est inhérente non seulement à la manutention proprement dite des assemblages de combustible, mais également à leur positionnement précis sur la plaque de coeur.

A cet effet, on a développé un module de guidage présentant un encombrement sensiblement correspondant à celui de chacun des assemblages, que l'on positionne au niveau de la plaque de coeur et plus spécifiquement, au niveau d'un emplacement immédiatement adjacent à l'emplacement considéré de l'assemblage à mettre en place, ce module étant notamment destiné à assurer le guidage en fin de course dudit assemblage sur les tenons appropriés de l'emplacement correspondant.

La mise en place de ces modules est réalisée par le mat principal de la machine de chargement, c'est à dire le mat assurant la manutention proprement dite des assemblages de combustibles. Ledit module est donc mis en place préalablement au chargement de l'assemblage considéré. L'opération est ainsi répétée pour la quasi-totalité des emplacements du coeur du réacteur.

Afin d'optimiser ce procédé de chargement, on a suggéré(par exemple dans le document FR-A-2 704 085) de faire appel à des modules de guidage multiples permettant ainsi de réduire le nombre de déplacements dudit module au sein de la plaque de coeur. Pour autant, de tels modules multiples ne permettent pas le chargement intégral du coeur de réacteur, nécessitant de multiples mises en place élémentaire des assemblages, notamment en périphérie du coeur, augmentant de manière significative la durée de chargement.

On a également proposé de guider l'extrémité libre des assemblages en fin de course au moyen d'un dispositif automatique qui se déplace seul au niveau de la plaque de coeur. Ce dispositif, qui permet certes de travailler en temps masqué, et d'aller dans les coins de la plaque de coeur est malheureusement coûteux, lourd en maintenance et en dosimétrie, et peut en outre parfois présenter des problèmes de fiabilité.

L'objectif de la présente invention est de fondamentalement permettre le chargement de l'intégralité d'un coeur de réacteur nucléaire, en réduisant la durée de non productivité de la centrale.

Ce but est atteint par un procédé présentant les caractéristiques exposées dans la revendication 1.

En d'autres termes, l'invention consiste à faire appel à trois types de modules de guidage, et à assurer leur manutention au niveau d'une part, du mât principal de la machine de chargement ou d'un organe de déplacement dédié à cet effet, également dénommé Z1, destiné, ainsi que déjà dit, à assurer la manutention des assemblages de combustible, et d'autre part d'un mât auxiliaire, dénommé Z3, associé à la machine de chargement ou dudit organe dédié, et destiné à assurer la mise en place des modules de guidage unitaires ou du module triple.

Ce mât auxiliaire est traditionnellement présent au niveau des machines de chargement pour les centrales de puissance de 1.300 et 1.450 MW et est généralement destiné à permettre la permutation des grappes et des bouchons présents au niveau de la partie supérieure du coeur du réacteur.

Ce mât, conformément à l'invention, subit une adaptation en termes de longueur, afin de permettre la manutention du module de guidage unitaire au fond du coeur du réacteur, et d'autre part, à munir son extrémité libre d'un grappin propre à être adapté audit module de guidage.
Ce faisant, il devient possible, conformément au procédé de l'invention, de réaliser au moyen de tels modules de guidage le chargement de 100 % d'un coeur de réacteur.

L'invention concerne également le dispositif pour la mise en oeuvre de ce procédé. Selon l'invention, ce dispositif intègre une machine de chargement muni d'un mat principal de manutention des assemblages de combustible nucléaire, et d'au moins un mât auxiliaire et comporte trois type de modules différents, respectivement des modules unitaires de guidage élémentaire, un module triple permettant le guidage d'au moins deux assemblages de combustible et enfin un module de guidage à six pavés destiné à permettre la mise en place de un à sept assemblages de combustible.

Ces modules de guidage sont du type de ceux décrits dans le document FR-A-2 704 085 précité.. Chaque module unitaire présente d'une part, sur sa face inférieure destinée à venir au contact de la plaque de coeur des orifices, destinés à coopérer avec des pions de positionnement, et d'autre part, deux parois verticales adjacentes, raccordées à une portion inclinée de guidage. De tels modules peuvent être assemblées à plusieurs, respectivement à trois ou à six afin de constituer un ensemble, lesdits modules étant réunis par l'un de leurs sommets en quinconce, correspondant à une diagonale de ladite plaque de coeur.

Le moyen d'assemblage des modules unitaires est typiquement constitué d'une équerre, formée de deux ailes, respectivement une aile horizontale de liaison des modules entre eux, et une aile verticale de rigidification.

La manière de réaliser l'invention et les avantages qui en découlent ressortiront mieux de l'exemple de réalisation qui suit donné à titre indicatif et non limitatif à l'appui des figures annexées.

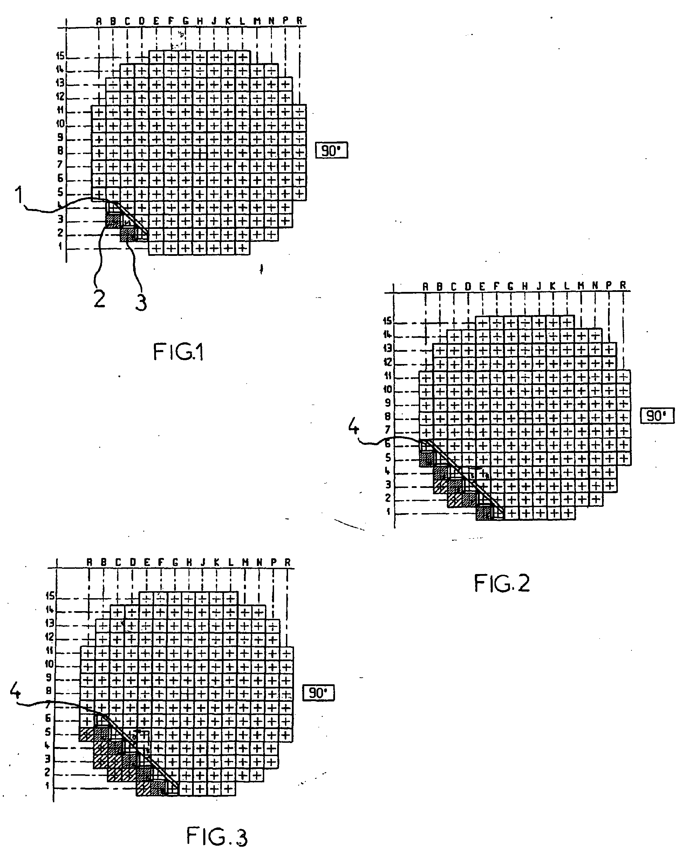

Les figures 1 à 8 illustrent la mise en oeuvre du procédé conformément à l'invention, et représentent notamment les différents emplacements d'un coeur de réacteur, en l'espèce d'une puissance de 1 300 Mégawatts.

Dans l'exemple décrit, la plaque de coeur comporte 193 emplacements, de section carrée, destinés à recevoir chacun un assemblage de combustible nucléaire. Ces emplacements sont répartis selon sensiblement un octogone. Selon les dimensions principales, on compte 15 emplacements, respectivement référencés verticalement de 1 à 15, et horizontalement A à R.

On procède tout d'abord (figure 1) à la mise en place d'un module de guidage triple (1), c'est à dire pourvu de trois pavés de guidage, au niveau de la diagonale B4 - C3 - D2 de la plaque de coeur, au moyen du mât auxiliaire de la machine de chargement. Chacun des pavés de guidage correspond à l'encombrement d'un emplacement de la plaque de coeur.

Une fois ce module de guidage mis en place, on procède à la mise en place de deux assemblages (2, 3) de combustible un à un au niveau des emplacements C2 et B3, le guidage étant donc réalisé au moyen dudit module triple (figure 2).

Puis, on procède, après escamotage du module triple (1), à la mise en place d'un module (4) composé de six pavés de guidage au niveau de la diagonale partant de A6 et aboutissant à F1 (figure 2), à l'aide du mat principal, classiquement dénommé Z1 de la machine de chargement.

On procède alors à la mise en place des assemblages de combustible un à au niveau de la diagonale A5 - E1 (figure 2).

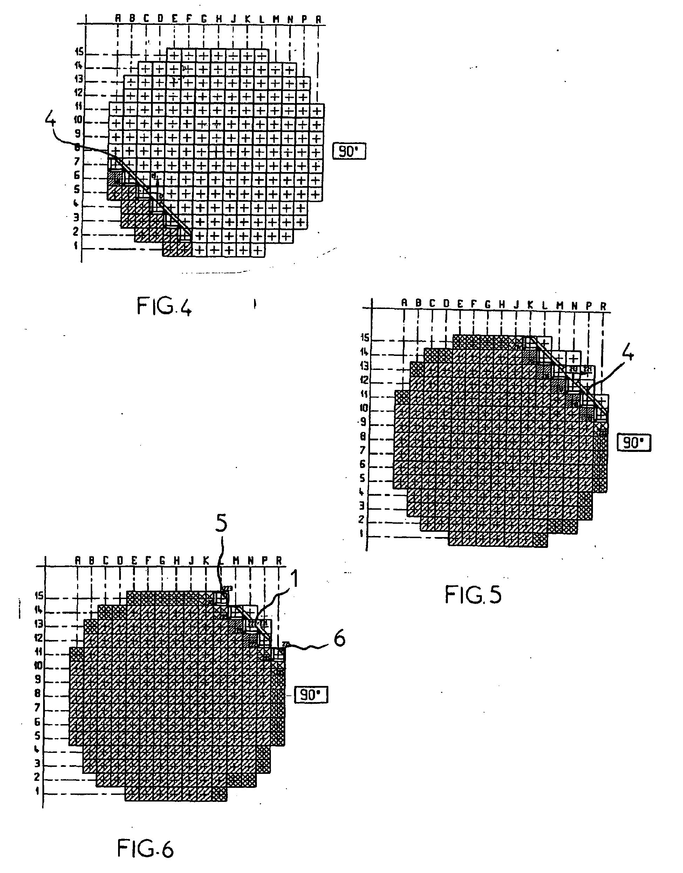

On décale le module (4) composé des six pavés de guidage à la diagonale suivante et on procède on positionnement un à un de six assemblages de combustible (figure 3). On décale ledit module (4) sur la même diagonale (voir flèche), afin de permettre le guidage et le positionnement du dernier assemblage sur cette diagonale en A6 (voir figure 4).

On recommence ces différentes opérations en décalant le module (4) constitué de six pavés de guidage, se déplaçant au total respectivement 39 fois et permettant l'insertion de 178 assemblages de combustible (figure 5). Pour ce faire, ledit module de guidage (4) est déplacé de une à trois fois pour chacune des diagonales dans laquelle il est mis en oeuvre.

Afin d'assurer la mise en place des assemblages de combustible au niveau des trois dernières diagonales, on procède de la manière suivante (figures 6 à 8).

On procède tout d'abord à la mise en place du module triple (1) précité au niveau de la diagonale M14 - P12, au moyen du mât auxiliaire de la machine de chargement, et on positionne aux deux extrémités de cette diagonale en L15 et R11, deux modules de guidage unitaires (5, 6), également au moyen du mât auxiliaire Z3 de la machine de chargement. On procède alors à la mise en place de six assemblages combustible au niveau de la diagonale K15 - R10 (figure 6).

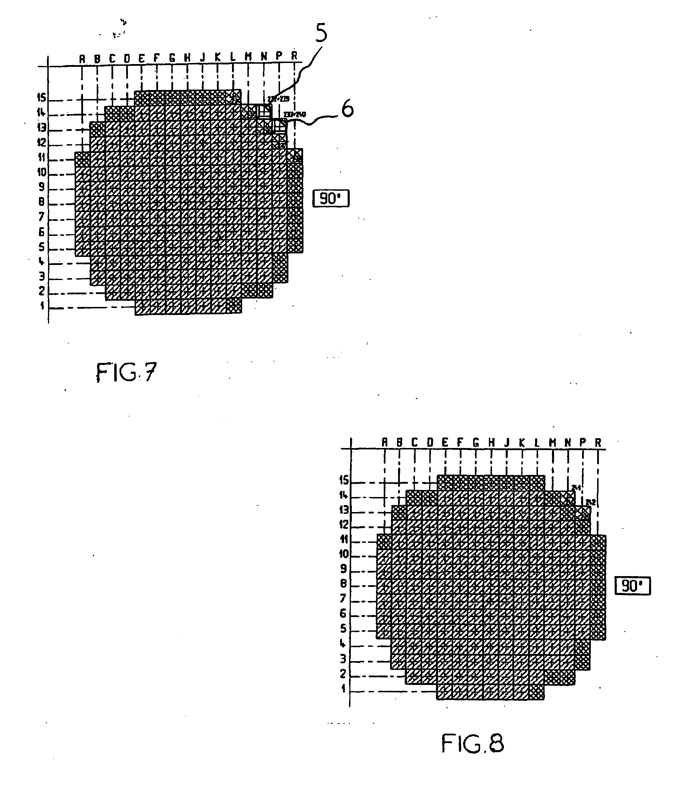

Lors de l'étape suivante, on enlève le module de guidage triple (1) et l'on positionne les deux modules de guidage unitaire (5, 6) au niveau des extrémités N14 et P13 (figure 7), toujours au moyen du mât auxiliaire Z3 de la machine de chargement, et on procède à la mise en place des cinq assemblages de combustibles au niveau de la diagonale L15 - R11.

On enlève alors ces deux modules de guidage unitaire (5, 6) et l'on procède à la mise en place des deux derniers assemblages combustibles à leur niveau, donc en N14 et P13 (figure 8).

On conçoit de fait tout l'intérêt du procédé de chargement du coeur de réacteur conforme à l'invention.

Tout d'abord, de par la réduction du nombre de modules de guidage (trois) à utiliser, et surtout de par la minimisation de l'utilisation des modules de guidage unitaire, on gagne un temps considérable pour le chargement intégral du coeur du réacteur.

On réduit de fait le nombre de manutentions et les risques qui lui sont associés.

Ces opérations de chargement permettent d'aboutir à un gain de temps important, puisque typiquement, la durée nécessaire au chargement du coeur d'un réacteur de 1.300 MW devient avec le procédé de l'invention inférieur à 32 heures, permettant donc de réduire des périodes pendant lesquelles la centrale est arrêtée, et donc d'optimiser la production d'énergie électrique correspondante.

## Revendications

1. Procédé pour le chargement du coeur d'un réacteur nucléaire avec des assemblages de combustible nucléaire sur une plaque de coeur de forme sensiblement octogonale, lesdits assemblages de forme prismatique et de section carrée étant positionnés sur une pluralité d'emplacements contigus de section carrée ménagés au sein de ladite plaque de coeur, lesdits emplacements comportant chacun des tenons mâles de positionnement et des trous femelles de circulation d'un liquide de refroidissement, et notamment d'eau, ces emplacements étant répartis selon des diagonales successives, respectivement comprenant une première diagonale correspondant à l'un des côtés de l'octogone dans lequel s'inscrit la plaque de coeur, des diagonales successives et une dernière diagonale correspondant au côté opposé dudit octogone, procédé dans lequel la mise en place des assemblages de combustible nucléaire est assurée au moyen d'un outil de manutention dénommée machine de chargement, et au moyen de modules de guidage amovibles, susceptibles d'être positionnés au niveau de chacun des emplacements de la plaque de coeur, ***caractérisé* en ce qu**'il consiste :
- à positionner au niveau de la seconde diagonale de la plaque de coeur un module de guidage triple (1) au moyen du mât auxiliaire de la machine de chargement ou d'un organe de déplacement dédié à cet effet, et ainsi permettre la mise en place de deux assemblages de combustibles au niveau de la première diagonale de ladite plaque ;
- puis à positionner au niveau de chacune des diagonales suivantes de la plaque de coeur, au moyen du mât principal de la machine de chargement ou de l'organe dédié un module de guidage (4) constitué de six pavages de guidage consécutifs et montés en diagonale, de telle sorte à permettre la mise en place de un à sept assemblages de combustible un à un, diagonale par diagonale et en déplaçant ledit module le long d'une même diagonale pour arriver à la longueur totale de celle-ci ;
- puis, au niveau du coté de la plaque de coeur opposé à la première diagonale, à positionner au niveau de l'avant-dernière diagonale, le module triple de guidage (1) au moyen du mât auxiliaire de la machine de chargement ou de l'organe dédié, et deux modules de guidage unitaire (5, 6) également au moyen du mât auxiliaire de la machine de chargement ou de l'organe dédié, de telle sorte à permettre la mise en place de six assemblages de combustible au niveau de l'avant-avant dernière diagonale ;
- puis à positionner les deux modules de guidage unitaire (5, 6) au moyen du mât auxiliaire de la machine de chargement ou de l'organe dédié au niveau de la dernière diagonale, afin de permettre la mise en place des cinq assemblages combustibles au niveau de l'avant dernière diagonale ;
- et enfin, après enlèvement des modules de guidage unitaire (5, 6), à mettre en place les deux derniers assemblages de combustible nucléaire au niveau des deux emplacements restants.

2. Procédé pour le chargement du coeur d'un réacteur nucléaire selon la revendication 1, ***caractérisé* en ce que** le module de guidage composé de six pavages de guidage (4) est déplacé de une à trois fois pour chacune des diagonales dans laquelle il est mis en oeuvre.

3. Dispositif pour la mise en place d'assemblages de combustible nucléaire au sein du coeur d'un réacteur nucléaire forme géométrique sensiblement octogonale, lesdits assemblages étant de forme prismatique et de section carrée, étant positionnés sur une pluralité d'emplacements contigus de section carrée, ménagés au sein de la plaque dudit coeur de réacteur, comportant chacun des tenons mâles de positionnement et des trous femelles de circulation d'un liquide de refroidissement, et notamment d'eau, ces emplacements étant répartis selon des diagonales successives, ledit dispositif comprenant un organe de déplacement pourvu d'un mât principal de manutention de modules de guidage amovibles desdits assemblages de combustible, lesdits modules de guidage étant susceptibles d'être positionnés au niveau de chacun des emplacements de la plaque de coeur, ***caractérisé* en ce qu**'il comporte trois types de modules différents, respectivement deux modules de guidage unitaire (5, 6), un module de guidage triple (1) permettant le guidage d'au moins deux assemblages de combustible et enfin un module à six pavés de guidage (4), destiné à permettre la mise en place de un à sept assemblages de combustible, et en ce qu'il comporte en outre un mât auxiliaire également de manutention des modules de guidage amovibles.

4. Dispositif pour la mise en place d'assemblages de combustible nucléaire au sein du coeur d'un réacteur nucléaire selon la revendication 3, ***caractérisé* en ce que** l'organe de déplacement est dédié à la manutention de modules de guidage.

5. Dispositif pour la mise en place d'assemblages de combustible nucléaire au sein du coeur d'un réacteur nucléaire selon la revendication 3, ***caractérisé* en ce que** l'organe de déplacement est constitué par la machine de chargement du coeur de réacteur en assemblages de combustibles, cette dernière étant munie d'au moins un mât auxiliaire, animé par ladite machine de chargement.

6. Dispositif pour la mise en place d'assemblages de combustible nucléaire au sein du coeur d'un réacteur nucléaire selon l'une des revendications 4 et 5, ***caractérisé* en ce que** les modules de guidage unitaire (5, 6) et le module de guidage triple (1) sont manutentionnés au moyen du mât auxiliaire, et **en ce que** le module de guidage à six pavés de guidage (4) est manutentionné par le mât principal.

7. Dispositif pour la mise en place d'assemblages de combustible nucléaire au sein du coeur d'un réacteur nucléaire selon l'une des revendications 3 à 6, ***caractérisé* en ce que** chaque module unitaire présente d'une part, sur sa face inférieure destinée à venir au contact de la plaque de coeur des orifices, destinés à coopérer avec des pions de positionnement, et d'autre part, deux parois verticales adjacentes, raccordées à une portion inclinée de guidage.

8. Dispositif pour la mise en place d'assemblages de combustible nucléaire au sein du coeur d'un réacteur nucléaire selon la revendication 7, ***caractérisé* en ce que** les modules de guidage unitaire sont susceptibles d'être assemblés à plusieurs, respectivement à trois ou à six afin de constituer un ensemble, lesdits modules étant réunis par l'un de leurs sommets en quinconce, correspondant à une diagonale de ladite plaque de coeur.

9. Dispositif pour la mise en place d'assemblages de combustible nucléaire au sein du coeur d'un réacteur nucléaire selon la revendication 8, ***caractérisé* en ce que** le moyen d'assemblage des modules unitaires est constitué d'une équerre, formée de deux ailes, respectivement une aile horizontale de liaison des modules entre eux, et une aile verticale de rigidification.

## Claims

1. A method for loading the core of a nuclear reactor with nuclear fuel assemblies on a core plate of an essnetially octogonal shape, said assemblies being of prismatic shape and of square cross-section being positioned on a plurality of adjacent locations of square cross-section disposed in said core plate, each of said locations comprising male positioning lugs and female holes for circulation of a liquid coolant, and particularly of water, said locations being distributed along successice diagonals, respectively comprising a first diagonal corresponding to one side of the core plate, successive diagonals and a last diagonal corresponding to the opposite side of said core plate, a method in which the nuclear fuel assemblies are installed by means of a handling tool called a refueling machine and by means of removable guidance modules, capable of being positioned at each of the locations of the core plate, **characterized in that** it consists in:
- positioning on the second diagonal of the core plate a triple guidance module (1) by means of the auxiliary mast of the refueling machine or of a movement member intended specifically for the purpose and thus allowing the installation of two fuel assemblies in the first diagonal of said locations;
- then positioning on each of the following diagonals of the core plate, by means of the main mast of the refueling machine or of the dedicated member a guidance module (4) consisting of six consecutive guidance paving blocks mounted diagonally, so as to allow the installation of one to seven fuel assemblies one by one, diagonal by diagonal and moving said module along one and the same diagonal to arrive at the full length of the latter;
- then, at the corner opposite the corner at which the positioning of the assemblies started, positioning the triple guidance module (1) on the penultimate diagonal by means of the auxiliary mast of the refueling machine or of the dedicated member, and two single-unit guidance modules (5, 6) also by means of the auxiliary mast of the refueling machine or of the dedicated member, so as to allow the installation of six fuel assemblies on the antipenultimate diagonal;
- then positioning the two single-unit guidance modules (5, 6) by means of the auxiliary mast of the refueling machine or of the dedicated member on the last diagonal, in order to allow the installation of the five fuel assemblies in the penultimate diagonal,
- and finally, after removing the single-unit guidance modules (5, 6), installing the last two nuclear fuel assemblies in the two remaining locations.

2. The method for loading the core of a nuclear reactor as claimed in claim 1, **characterized in that** the guidance module consisting of six guidance paving blocks (4) is moved one to three times for each of the diagonals in which it is implemented.

3. A device for installing nuclear fuel assemblies inside the core of a nuclear reactor of an essentially octogonal shape, said assemblies being of prismatic shape and of square cross-section, being positioned on a plurality of adjacent locations of square cross-section disposed in said core plate, each of said locations comprising male positioning lugs and female holes for circulation of a liquid coolant, and particularly of water, said locations being distributed along successice diagonals, said device comprising a movement member provided with a main mast for handling said nuclear fuel assemblies, also for handling removable guidance modules, capable of being positioned in each of the locations of the core plate, **characterized in that** it comprises three different types of modules, respectively two single-unit guidance modules (5, 6), a triple guidance module (1) allowing the guidance of at least two fuel assemblies and finally a module with six guidance paving blocks (4) intended to allow the installation of one to seven fuel assemblies, and it that it also comprises at least one auxiliary mast also for handling removable guidance modules.

4. The device for installing nuclear fuel assemblies inside the core of a nuclear reactor as claimed in claim 3, **characterized in that** the movement member is dedicated to the handling of guidance modules.

5. The device for installing nuclear fuel assemblies inside the core of a nuclear reactor as claimed in claim 3, **characterized in that** the movement member is the refueling machine of the reactor core with fuel assemblies, said machine being also provided with at leadt one auxiliary mast, operated by said refueling machine.

6. The device for installing nuclear fuel assemblies inside the core of a nuclear reactor as claimed in one of claims 4 and 5, **characterized in that** the single-unit guidance modules (5, 6) and the triple guidance module (1) are handled by means of the auxiliary mast, and **in that** the guidance module with six guidance paving blocks (4) is handled by the main mast.

7. The device for installing nuclear fuel assemblies inside the core of a nuclear reactor as clamied in one of claims 3 to 6, **characterized in that** each single-unit module has, on the one hand, on its bottom face intended to come into contact with the core plate, orifices intended to interact with positioning pins, and, on the other hand, two vertical adjacent walls connected to an inclined guidance portion.

8. The device for installing nuclear fuel assemblies inside the core of a nuclear reactor as claimed in claim 7, **characterized in that** the single-unit guidance modules are capable of being assembled in numbers, respectively in threes or in sixes in order to form an assembly, said modules being joined together by one of their tops in quincunx, corresponding to a diagonal of said core plate.

9. The device for installing nuclear fuel assemblies inside the core of a nuclear reactor as claimed in claim 8, **characterized in that** the means of assembling the single-unit modules consists of a bracket, formed of two wings, respectively a horizontal wing for connecting the modules together, and a vertical stiffening wing.

## Patentansprüche

1. Verfahren zum Laden des Kerns eines Kernreaktors mit Kernbrennstabbündeln auf einer Kernplatte von im Wesentlichen achteckiger Form, wobei die prismenförmigen Brennstabbündel mit quadratischem Querschnitt auf einer Vielzahl von in der Kernplatte vorgesehenen aneinandergrenzenden Standplätzen mit quadratischem Querschnitt positioniert sind, die jeweils vorstehende Positionierungszapfen und aufnehmende Löcher zum Umlauf eines Kühlfluids und insbesondere Wasser umfassen, wobei diese Standplätze auf aufeinanderfolgenden Diagonalen verteilt sind, die eine erste Diagonale, die einer der Seiten des Achtecks entspricht, in das die Kernplatte eingeschrieben ist, aufeinanderfolgende Diagonalen und eine letzte Diagonale umfassen, die der entgegengesetzten Seite dieses Achtecks entspricht, wobei bei diesem Verfahren das Einsetzen der Kernbrennstabbündel mit Hilfe eines Lademaschine genannten Manipulierwerkzeugs und mit Hilfe von abnehmbaren Führungsmodulen gewährleistet wird, die auf Höhe jeder der Standplätze der Kernplatte positioniert werden können, **dadurch gekennzeichnet, dass** es darin besteht, dass:
- auf Höhe der zweiten Diagonale der Kernplatte ein Dreifachführungsmodul (1) mit Hilfe des Hilfsmastes der Lademaschine oder eines hierfür dedizierten Bewegungsorgans positioniert wird und auf diese Weise das Einsetzen von zwei Brennstabbündeln auf Höhe der ersten Diagonale der Platte gestattet wird;
- dann auf Höhe jeder der folgenden Diagonalen der Kernplatte mit Hilfe des Hauptmastes der Lademaschine oder des dedizierten Organs ein Führungsmodul (4) positioniert wird, das aus sechs aufeinanderfolgenden und diagonal montierten Führungssteinen besteht, so dass das Einsetzen von ein bis sieben Brennstabbündeln nacheinander, Diagonale für Diagonale, gestattet wird, indem das Modul auf ein und derselben Diagonale bewegt wird, um auf deren gesamte Länge zu kommen;
- dann auf Höhe der der ersten Diagonale entgegengesetzten Seite der Kernplatte auf Höhe der vorletzten Diagonale das Dreifachführungsmodul (1) mit Hilfe des Hilfsmastes der Lademaschine oder des dedizierten Organs und zwei Einzelführungsmodule (5, 6) ebenfalls mit Hilfe des Hilfsmastes der Lademaschine oder des dedizierten Organs positioniert werden, so dass das Einsetzen von sechs Brennstabbündeln auf Höhe der vorvorletzten Diagonale gestattet wird;
- dann die beiden Einzelführungsmodule (5, 6) mit Hilfe des Hilfsmastes der Lademaschine oder des dedizierten Organs auf Höhe der letzten Diagonale positioniert werden, um das Einsetzen der fünf Brennstabbündel auf Höhe der vorletzten Diagonale zu gestatten;
- und schließlich nach Entfernung der Einzelführungsmodule (5, 6) die beiden letzten Kernbrennstabbündel auf Höhe der beiden restlichen Standplätze eingesetzt werden.

2. Verfahren zum Laden des Kerns eines Kernreaktors nach Anspruch 1, **dadurch gekennzeichnet, dass** das aus sechs Führungssteinen (4) bestehende Führungsmodul bei jeder der Diagonalen, in der es eingesetzt wird, ein- bis dreimal verlagert wird.

3. Vorrichtung zum Einsetzen von Kernbrennstabbündeln in einen Kern eines Kernreaktors von im Wesentlichen achteckiger Form, wobei die Brennstabbündel prismenförmig und von quadratischem Querschnitt sind, auf einer Vielzahl von in der Platte des Reaktorkerns vorgesehenen aneinandergrenzenden Standplätzen mit quadratischem Querschnitt positioniert sind, jeweils vorstehende Positionierungszapfen und aufnehmende Löcher zum Umlauf eines Kühlfluids und insbesondere Wasser umfassen, wobei diese Standplätze auf aufeinanderfolgenden Diagonalen verteilt sind, wobei diese Vorrichtung ein Bewegungsorgan umfasst, das mit einem Hauptmast zum Manipulieren von abnehmbaren Führungsmodulen der Brennstabbündel versehen ist, wobei diese Führungsmodule auf Höhe jedes der Standplätze der Kernplatte positioniert werden können, **dadurch gekennzeichnet, dass** sie drei verschiedene Typen von Modulen umfasst, und zwar zwei Einzelführungsmodule (5, 6), ein Dreifachführungsmodul (1), das die Führung von mindestens zwei Brennstabbündeln gestattet, und schließlich ein Modul mit sechs Führungssteinen (4), das dazu bestimmt ist, das Einsetzen von ein bis sieben Brennstabbündeln zu gestatten, und dass sie außerdem einen Hilfsmast ebenfalls zum Manipulieren der abnehmbaren Führungsmodule umfasst.

4. Vorrichtung zum Einsetzen von Kernbrennstabbündeln in den Kern eines Kernreaktors nach Anspruch 3, **dadurch gekennzeichnet, dass** das Bewegungsorgan für die Manipulierung von Führungsmodulen dediziert ist.

5. Vorrichtung zum Einsetzen von Kernbrennstabbündeln in den Kern eines Kernreaktors nach Anspruch 3, **dadurch gekennzeichnet, dass** das Bewegungsorgan aus der Maschine zum Laden des Reaktorkerns mit Brennstabbündeln besteht, wobei diese mit mindestens einem Hilfsmast versehen ist, der durch die Lademaschine bewegt wird.

6. Vorrichtung zum Einsetzen von Kernbrennstabbündeln in den Kern eines Kernreaktors nach einem der Ansprüche 4 und 5, **dadurch gekennzeichnet, dass** die Einzelführungsmodule (5, 6) und das Dreifachführungsmodul (1) mit Hilfe des Hilfsmastes manipuliert werden und dass das Führungsmodul mit sechs Führungssteinen (4) durch den Hauptmast manipuliert wird.

7. Vorrichtung zum Einsetzen von Kernbrennstabbündeln in den Kern eines Kernreaktors nach einem der Ansprüche 3 bis 6, **dadurch gekennzeichnet, dass** jedes Einzelmodul einerseits auf seiner Unterseite, die dazu bestimmt ist, mit der Kernplatte in Kontakt zu kommen, Öffnungen aufweist, die dazu bestimmt sind, mit Positionierungszapfen zusammenzuwirken, und andererseits zwei aneinandergrenzende vertikale Wände, die mit einem geneigten Führungsabschnitt verbunden sind.

8. Vorrichtung zum Einsetzen von Kernbrennstabbündeln in den Kern eines Kernreaktors nach Anspruch 7, **dadurch gekennzeichnet, dass** die Einzelführungsmodule zu mehreren, und zwar zu drei bzw. zu sechs, zusammengefügt werden können, um eine Einheit zu bilden, wobei diese Module über einen ihrer Scheitel entsprechend einer Diagonale der Kernplatte versetzt verbunden sind.

9. Vorrichtung zum Einsetzen von Kernbrennstabbündeln in den Kern eines Kernreaktors nach Anspruch 8, **dadurch gekennzeichnet, dass** das Mittel zum Zusammenfügen der Einzelmodule aus einem Winkel besteht, der von zwei Schenkeln gebildet ist, und zwar einem horizontalen Schenkel zur Verbindung der Module miteinander und einen vertikalen Versteifungsschenkel.
